# FASCICULE DE BREVET EUROPEEN

(11) **EP 1 227 948 B1**
(45) Date de publication et mention de la délivrance du brevet: **03.12.2003**
(21) Numéro de dépôt: 00969661.8
(22) Date de dépôt: 20.10.2000
(51) Int. Cl.: B60K 15/05, E05B 65/12

(54) **TRAPPE A CARBURANT DE VEHICULE AUTOMOBILE**
TANKVERSCHLUSSDECKEL FÜR KRAFTFAHRZEUG
MOTOR VEHICLE FUEL FLAP

(30) Priorité: 22.10.1999 FR 9913468
(43) Date de publication de la demande: 07.08.2002
(73) Titulaire: Renault s.a.s., 92100 Boulogne Billancourt (FR)
(72) Inventeur: METAIS, Florent, F-78180 Montigny le Bretonneux (FR); PAGNO, Claude, F-78470 Saint Remy les Chevreuses (FR)
(86) Numéro de dépôt international: FR0002929
(87) Numéro de publication internationale: WO01028798

(56) Documents cités:
- EP-A- 0 846 585
- DE-A- 19 654 448
- FR-A- 2 721 262

## Description

La présente invention a pour objet une trappe à carburant de véhicule automobile. Cette trappe est du type comportant une cuvette ou bol monté dans la carrosserie du véhicule, et formant un évidement dans la carrosserie, dans le fond duquel débouche au moins une extrémité d'une canalisation de remplissage d'un réservoir de carburant de véhicule automobile. Dans le cas de véhicules utilisant plusieurs types de carburant, tels que de l'essence et du gaz de pétrole liquéfié, les extrémités de deux canalisations reliées à deux réservoirs peuvent déboucher dans le fond du bol.

Le bol est fermé par un volet articulé, et pivotant entre une position de fermeture, dans laquelle il se trouve dans le prolongement de la carrosserie du véhicule, et une position d'ouverture, dans laquelle il est basculé à environ 90° vers l'extérieur, et laisse l'accès à l'extrémité de chaque canalisation de remplissage.

L'orifice de chaque canalisation de remplissage peut être obturé par un bouchon indépendant ou, dans le cas d'essence ou de gazole, le bouchon peut être fixé sur la face interne du volet, et venir obturer l'extrémité de la canalisation lorsque le volet est dans sa position de fermeture.

Le plus souvent, le volet de la trappe est soumis à l'action d'un ressort qui assure le maintien stable du volet dans la position d'ouverture, d'une part, et dans la position de fermeture, d'autre part. Un tel volet, soumis à l'action d'un ressort, est décrit, par exemple dans le document FR-A-2 721 262. L'inconvénient d'une telle solution est que, lorsqu'un effort est exercé en permanence sur le volet, par exemple par un joint, le ressort doit encaisser la réaction procurée par le joint, afin d'éviter une ouverture non souhaitée du volet sous l'effet d'un choc ou de vibrations.

Le document EP-A-0 846 585, qui sert de base pour la présentation en deux parties de la revendication 1, concerne une trappe à carburant, dans laquelle le volet est maintenu en position de fermeture par un système de verrouillage comprenant un cylindre et un piston monté coulissant dans le cylindre, le piston étant susceptible d'occuper deux positions stables dans le cylindre, une position correspondant à la position de fermeture du volet et une position correspondant à une position de libération du volet. A l'extrémité de la tige du piston est monté un bras transversal destiné à pénétrer dans une encoche ménagée dans une patte solidaire de la face intérieure du volet. Lorsque la tige du piston est en position sortie, le bras transversal solidaire de celle-ci peut échapper à l'encoche ménagée dans la patte et permettre le basculement du volet vers sa position d'ouverture. Cette solution est complexe, car nécessitant un dispositif de blocage rapporté sur la face extérieure du bol, nécessitant une patte ménagée sur la face intérieure du volet, et nécessitant un ressort complémentaire destiné à réaliser le passage du volet vers sa position d'ouverture. Outre le coût élevé de ce système, celui-ci nécessite une précision de montage importante, et présente en outre l'inconvénient que les pièces constitutives du verrouillage font saillie à l'intérieur du bol, notamment la tige du piston et la patte solidaire de la face intérieure du volet, lorsque le volet est en position d'ouverture. Ces pièces en saillie sont gênantes pour le passage du pistolet de remplissage en carburant, peuvent être détériorées par le pistolet, et peuvent blesser la main de l'opérateur.

Le but de l'invention est de fournir une trappe à carburant, dans laquelle le volet puisse être bloqué de façon positive, en position de fermeture, dans un parfait alignement avec la face extérieure de la carrosserie, même si le volet est de dimensions importantes, notamment lorsque le bol appartenant à la trappe sert au logement des extrémités de deux canalisations de remplissage de réservoirs. Ce but doit être atteint avec des moyens simples, fiables, et qui limitent les parties en saillie à l'intérieur du bol monté dans la carrosserie du véhicule et sur la face intérieure du volet de fermeture, afin d'éviter les risques de détérioration par un pistolet de remplissage, ou les risques de blessure d'une main de l'opérateur.

La trappe à carburant selon l'invention est du type comportant un bol ou cuvette, monté dans la carrosserie du véhicule, dans le fond duquel débouche au moins une extrémité d'une canalisation de remplissage d'un réservoir de carburant, et à proximité d'une extrémité duquel est articulé un volet susceptible d'occuper une première position de fermeture, dans laquelle sa face extérieure est disposée dans le prolongement de la carrosserie, et une seconde position d'ouverture, dans laquelle il est pivoté d'environ 90° pour donner accès à l'extrémité de chaque canalisation de remplissage.

Suivant l'objet de l'invention, cette trappe est caractérisée en ce que, dans une zone décalée par rapport à l'axe d'articulation du volet sur le bol, le volet comporte, du côté de sa face interne, au moins un doigt sensiblement parallèle au volet, et le bol comporte au moins un évidement qui, débouchant dans sa face intérieure et du côté ouvert du bol, délimite, avec un pion central présentant une forme convexe tournée du côté du bord du bol et une forme concave tournée du côté opposé, une piste de guidage pour le doigt du volet, lors des opérations de fermeture et d'ouverture de celui-ci, par simple poussée exercée sur le volet pour chaque opération, le doigt du volet étant maintenu plaqué dans le fond de la surface concave du pion, sous l'action de moyens élastiques agissant dans un sens d'ouverture du volet, lorsque le volet est en position de fermeture, ou inversement le bol étant alors équipé d'au moins un doigt parallèle à l'axe du volet et le volet étant équipé d'au moins un plot comportant une rainure formant piste de guidage pour le doigt du bol.

Dans la mesure où le blocage du volet en position de fermeture est réalisé de façon positive, par appui de chaque doigt associé au volet ou au bol dans le fond de la surface concave d'une pièce solidaire du bol ou du volet, le positionnement du volet par rapport à la carrosserie est réalisé de façon parfaite, même lorsque le volet est de grandes dimensions, et le volet peut encaisser des efforts importants résultant, par exemple, de la présence d'un joint entourant l'extrémité de la canalisation de remplissage du réservoir. En outre, ce dispositif est de structure très simple, puisque ses pièces constitutives sont totalement intégrées dans les pièces traditionnelles, le ou les évidements étant ménagés dans le bol, seuls les doigts destinés à pénétrer dans ces évidements étant rapportés sur le volet.

Suivant une caractéristique de l'invention, chaque doigt possède un débattement sensiblement parallèlement au plan du volet ou du bol d'une valeur sensiblement égale à la largeur maximale de l'évidement correspondant. Le débattement de l'extrémité de chaque doigt peut résulter d'un mouvement du doigt relativement au volet, ou d'une capacité de déformation de l'extrémité du doigt par rapport à sa zone de fixation sur le volet.

Afin d'assurer une fermeture du volet avec une totale certitude, chaque évidement destiné à recevoir et à guider un doigt possède une entrée conique de largeur sensiblement égale à la valeur du débattement du doigt correspondant.

Suivant une première forme d'exécution de cette trappe, celle-ci comprend un doigt et un évidement correspondant ménagé dans la paroi d'extrémité du bol parallèle à l'axe d'articulation du volet.

Suivant une autre forme d'exécution de cette trappe, celle-ci comprend deux doigts et deux évidements correspondants ménagés dans deux parois perpendiculaires à l'axe d'articulation du volet et symétriques par rapport au plan médian longitudinal du bol. Cette seconde forme d'exécution est avantageuse, notamment pour les volets de grande surface, dans la mesure où cette double fixation évite les risques de gauchissement du volet en position de fermeture, et assure donc un parfait alignement du volet et de la carrosserie.

Seion une caractéristique de l'invention, dans le cas de cette seconde forme d'exécution, le volet ou le bol est équipé, sur sa face intérieure, d'une pièce en forme d'étrier dont les extrémités des branches, coaxiales, sont montées pivotantes sur la face intérieure du volet ou du bol, et dont la partie centrale rectiligne comporte deux prolongements vers l'extérieur, formant les deux doigts destinés à coopérer avec les évidements du bol ou du volet. Les doigts et l'étrier qui les portent sont donc montés de façon pendulaire sur le volet, ce montage pendulaire assurant un débattement suffisant des doigts pour suivre le parcours qui leur est imposé par les évidements correspondants.

Conformément à une autre forme d'exécution, chaque doigt, porté par une paroi du volet ou du bol perpendiculaire à l'axe de rotation du volet, est fixe, tandis que chaque piste de guidage d'un doigt est ménagée dans un plot monté articulé respectivement sur le bol ou sur le volet avec une amplitude de mouvement correspondant à l'amplitude du débattement du doigt dans la piste.

Suivant une possibilité, un ressort tend à faire pivoter le volet dans un sens d'ouverture. Lorsque, partant de la position de fermeture du volet, une pression est exercée sur celui-ci, chaque doigt échappe à la surface concave du pion, et suit le parcours qui lui est imposé à l'intérieur de l'évidement. Le ressort assure le basculement du volet dans un sens d'ouverture, sur une course suffisante pour permettre le dégagement de chaque doigt hors de l'évidement correspondant.

Suivant une autre caractéristique de l'invention, la face intérieure du volet est équipée d'un obturateur d'une extrémité de canalisation de remplissage d'un réservoir de carburant, constitué par un manchon tubulaire réalisé en un matériau élastique et destiné à venir coiffer l'extrémité de canalisation en venant prendre appui contre le fond du bol. Dans ce cas, la compression du manchon tubulaire et ses propriétés élastiques participent également à l'ouverture du volet lorsque celui-ci est dégagé de sa position de blocage.

De toute façon, l'invention sera bien comprise à l'aide de la description qui suit, en référence au dessin schématique annexé représentant, à titre d'exemple non limitatif, une forme d'exécution de cette trappe à carburant :
Figure 1 en est une vue en perspective, la partie extérieure du volet ayant été supprimée pour des raisons de clarté ;
Figures 2 et 3 en sont deux vues en coupe longitudinale et à échelle agrandie selon la ligne II-II de figure 1, respectivement au début de la fermeture et en position de fermeture.

La trappe à carburant représentée au dessin comprend une cuvette ou bol 2 en matière synthétique, par exemple, destiné à être monté dans la carrosserie du véhicule. Dans le fond du bol débouche au moins une extrémité 3 d'une canalisation 4 de remplissage d'un réservoir de carburant. Cette trappe comprend également un volet désigné par la référence générale 5, le volet comportant dans le cas présent un support 6 équipé d'un manchon tubulaire 7 destiné à protéger l'extrémité 3 du conduit 4 de remplissage. La fermeture avec étanchéité est obtenue par des moyens connus, par exemple un clapet 8, situé à l'extrémité du conduit 4. Le support 6 du volet porte également une partie 9 de surface correspondant à la surface de l'ouverture du bol, cette partie 9 étant peinte dans le même ton que la carrosserie et étant destinée à venir dans l'alignement de la carrosserie lorsque le volet 5 est en position de fermeture. Le bol 2 présentant, en vue de face, une forme générale sensiblement rectangulaire, est équipé, à proximité de l'une de ses extrémités, des paliers 10 permettant le montage pivotant du volet 5. Un ressort 12 associé à cette partie pivotante, permet de réaliser le basculement du volet vers sa position d'ouverture ou de réaliser seulement un début d'ouverture.

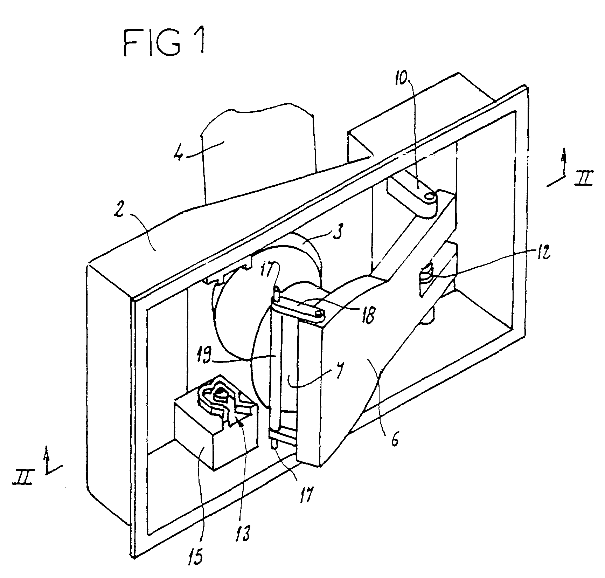

Comme montré aux figures 1 à 3, le bol 2 comprend deux évidements 13 ménagés dans deux parois opposées, perpendiculaires à l'axe de rotation du volet, dans la zone du bol située à proximité de l'extrémité opposée à celle comportant le volet. Chaque évidement débouche, d'une part, du côté de l'intérieur du bol et, d'autre part, du côté ouvert du bol, par une entrée conique 14, de largeur maximale au moins égale à la largeur maximale de l'évidement 13. Les deux évidements 13 ménagés dans deux parois opposées, qui peuvent éventuellement comporter un épaississement localisé 15, sont symétriques par rapport au plan médian longitudinal du bol.

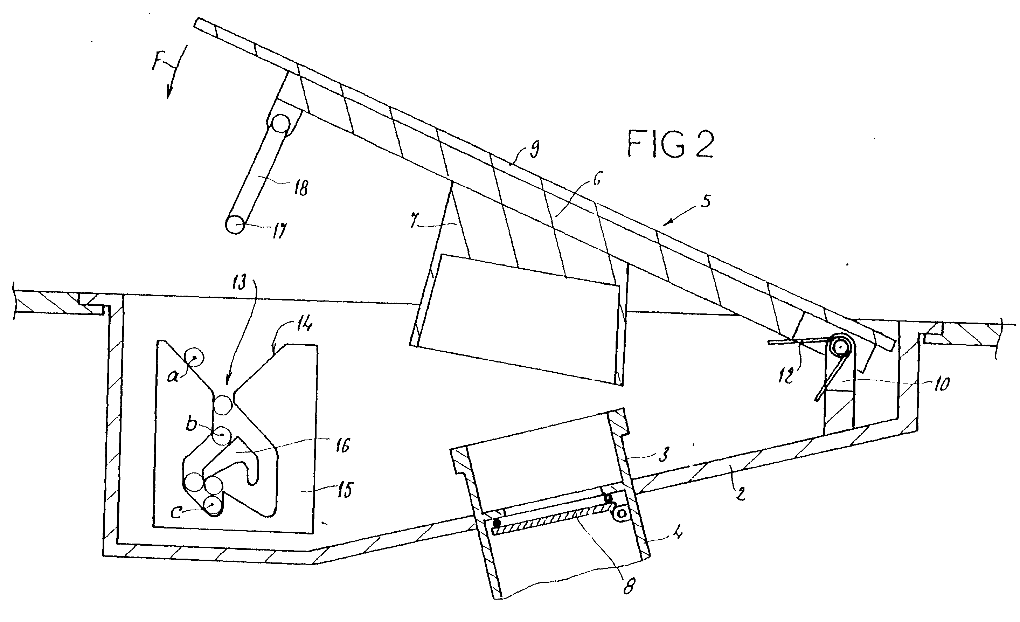

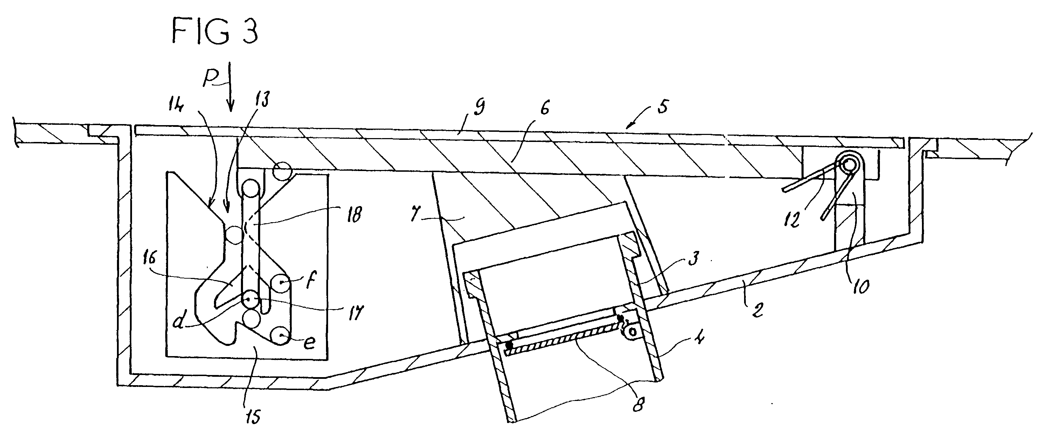

Chaque évidement 13 comporte en son centre un pion 16 possédant une face convexe tournée du côté de l'ouverture de l'évidement et une face concave tournée du côté opposé. Ce pion 16 délimite, avec les parois de l'évidement, une piste destinée à réaliser le guidage d'un doigt 17 monté sur le volet 5. Les formes respectives des parois délimitant l'évidement et du pion 16 ne permettent le guidage d'un doigt 17 que dans un seul sens, qui est le sens contraire des aiguilles d'une montre, dans la forme d'exécution représentée aux figures 2 et 3. Chaque doigt 17 destiné à coopérer avec un évidement 13, est monté sur un étrier dont les deux branches 18 sont articulées sur le corps du volet autour d'un axe parallèle à l'axe d'articulation du volet, et dont la partie centrale rectiligne 19 porte les deux doigts qui sont constitués par ses propres extrémités.

Le débattement obtenu par pivotement de l'étrier 18, 19 vis-à-vis du volet 5, permet aux doigts 17 de se déplacer suivant toute la largeur des évidements correspondants 13.

Le fonctionnement de cette trappe à carburant est le suivant. Au cours du mouvement de fermeture du volet, une force F est exercée par l'opérateur sur le volet, comme montré à la figure 2. Les doigts 17 de l'étrier viennent en contact avec l'entrée conique 14 des évidements 13 dans une position aléatoire, fonction de la position angulaire des branches 18 de l'étrier. Les doigts 17 peuvent, par exemple, venir en contact avec cette entrée conique dans la position a de figure 2. La pression exercée sur le volet se poursuivant, les doigts 17 occupent la position b où ils sont guidés par la face extérieure du pion 16, puis la position c où ils viennent en butée contre le fond d'un évidement 13. L'opérateur relâchant sa pression, le rappel exercé par le ressort 12 ainsi que par la détente du manchon élastique 7 provoque un léger pivotement du volét en sens inverse, au cours duquel les doigts 17 viennent en appui contre la face concave du pion 16 et sont guidés par cette face jusqu'au fond de cette partie concave, ce qui correspond à la position d représentée à la figure 3.

Pour réaliser l'ouverture du volet, il convient d'exercer une pression P sur celui-ci, comme montré à la figure 3, pour amener les doigts 17 dans la position e, c'est-à-dire au fond des évidements 13. Lorsque l'on relâche la pression exercée sur le volet, sous l'effet de la détente du ressort 12, les doigts sont guidés dans la piste représentée à droite à la figure 3, pour occuper la position f, avant d'être dégagés des évidements respectifs 13 dans lesquels ils sont engagés.

Le fait de disposer de deux points de blocage positifs du volet permet d'assurer un parfait alignement de la partie extérieure du volet et de la carrosserie, tout en résistant parfaitement à des contraintes élastiques résultant, d'une part, de l'action du ressort 12, mais également de l'action du manchon élastique 7, si un tel manchon est utilisé pour réaliser l'obturation d'une extrémité de canalisation de remplissage en carburant.

Comme il va de soi, l'invention ne se limite pas à la seule forme d'exécution de cette trappe, décrite ci-dessus à titre d'exemple, elle en embrasse au contraire toutes les variantes. C'est ainsi notamment que le bol et le volet pourrait ne comporter qu'un ensemble évidement 13-doigt 17, disposé par exemple dans la paroi d'extrémité du bol opposé à la partie du bol comportant l'axe d'articulation du volet 5, que le volet 5 pourrait ne pas comporter de dispositif d'obturation de l'extrémité de la canalisation de remplissage en carburant, que la trappe pourrait posséder une forme autre que rectangulaire, que les doigts pourraient être portés par le bol et les pistes de guidage portées par le volet, ou encore que les doigts pourraient être fixes et les pistes de guidage animées d'un mouvement de débattement, sans que l'on sorte pour autant du cadre de l'invention.

## Revendications

1. Trappe à carburant de véhicule automobile, du type comportant un bol (2) ou cuvette, monté dans la carrosserie du véhicule, dans le fond duquel débouche au moins une extrémité (3) d'une canalisation (4) de remplissage d'un réservoir de carburant, et à proximité d'une extrémité duquel est articulé un volet (5) susceptible d'occuper une première position de fermeture, dans laquelle sa face extérieure est disposée dans le prolongement de la carrosserie, et une seconde position d'ouverture, dans laquelle il est pivoté d'environ 90° pour donner accès à l'extrémité de chaque canalisation de remplissage, **caractérisée en ce que**, dans une zone décalée par rapport à l'axe d'articulation (10) du volet (5) sur le bol (2), le volet (5) comporte, du côté de sa face interne, au moins un doigt (17) sensiblement parallèle au volet, et le bol comporte au moins un évidement (13) qui, débouchant dans sa face intérieure et du côté ouvert du bol, délimite, avec un pion central (16) présentant une forme convexe tournée du côté du bord du bol et une forme concave tournée du côté opposé, une piste de guidage pour le doigt (17) du volet, lors des opérations de fermeture et d'ouverture de celui-ci, par simple poussée exercée sur le volet pour chaque opération, le doigt (17) du volet (5) étant maintenu plaqué dans le fond de la surface concave du pion (16), sous l'action de moyens élastiques (7, 12) agissant dans un sens d'ouverture du volet (5), lorsque le volet est en position de fermeture, ou inversement le bol étant alors équipé d'au moins un doigt parallèle à l'axe du volet et le volet étant équipé d'au moins un plot comportant une rainure formant piste de guidage pour le doigt du bol.

2. Trappe à carburant selon la revendication 1, **caractérisée en ce que** chaque doigt (17) possède un débattement sensiblement parallèlement au plan du volet ou du bol, d'une valeur sensiblement égale à la largeur maximale de l'évidement (13) correspondant.

3. Trappe à carburant selon la revendication 2, **caractérisée en ce que** chaque évidement (13) destiné à recevoir et à guider un doigt (17) possède une entrée conique (14) de largeur sensiblement égale à la valeur du débattement du doigt (17) correspondant.

4. Trappe à carburant selon l'une quelconque des revendications 1 à 3, **caractérisée en ce qu'**elle comprend un doigt et un évidement correspondant ménagé dans la paroi d'extrémité du bol parallèle à l'axe d'articulation du volet.

5. Trappe à carburant selon l'une quelconque des revendications 1 à 3, **caractérisée en ce qu'**elle comprend deux doigts (17) et deux évidements (13) correspondants ménagés dans deux parois perpendiculaires à l'axe d'articulation (10) du volet (5) et symétriques par rapport au plan médian longitudinal du bol (2).

6. Trappe à carburant selon la revendication 5, **caractérisée en ce que** le volet (5) ou le bol (2) est équipé, sur sa face intérieure, d'une pièce en forme d'étrier dont les extrémités des branches (18), coaxiales, sont montées pivotantes sur la face intérieure du volet (5) ou du bol (2), et dont la partie centrale rectiligne (19) comporté deux prolongements vers l'extérieur, formant les deux doigts (17) destinés à coopérer avec les évidements (13) du bol (2) ou du volet (5).

7. Trappe à carburant selon la revendication 1, **caractérisée en ce que** chaque doigt, porté par une paroi du volet ou du bol perpendiculaire à l'axe de rotation du volet, est fixe, tandis que chaque piste de guidage d'un doigt est ménagée dans un plot monté articulé respectivement sur le bol ou sur le volet avec une amplitude de mouvement correspondant à l'amplitude du débattement du doigt dans la piste.

8. Trappe à carburant selon l'une quelconque des revendications 1 à 7, **caractérisée en ce qu'**un ressort (12) tend à faire pivoter le volet (5) dans un sens d'ouverture.

9. Trappe à carburant selon l'une quelconque des revendications 1 à 8, **caractérisée en ce que** la face intérieure (6) du volet (5) est équipée d'un obturateur (7) d'une extrémité de canalisation de remplissage d'un réservoir de carburant, constitué par un manchon tubulaire réalisé en un matériau élastique et destiné à venir coiffer l'extrémité (3) de canalisation (4) en venant prendre appui contre le fond du bol.

## Patentansprüche

1. Kraftstoffeinlass für ein Kraftfahrzeug, mit einer Wanne (2) oder einem Behälter, die in die Karosserie des Fahrzeuges eingesetzt ist, wobei in ihrem Boden mindestens ein Ende (3) einer Leitung (4) für das Einfüllen von Kraftstoff in den Tank mündet und wobei in der Nähe eines ihrer Enden eine Klappe (5) angelenkt ist, die eine erste Verschlussstellung einnehmen kann, in der ihre Außenseite in der Verlängerung der Karosserie liegt und eine zweite Offenstellung einnehmen kann, in der sie um etwa 90° verschwenkt ist um so den Zugang zu den Enden einer jeden Einfüllleitung freizugeben, **dadurch gekennzeichnet, dass** in einem relativ zur Gelenkachse (10) der Klappe (5) der Wanne (2) versetzten Bereich die Klappe (5) auf ihrer Innenseite mindestens einen Stift (17) aufweist, der im wesentlichen parallel zur Klappe verläuft und dass die Wanne mindestens eine Aussparung (13) aufweist, die in ihrer Innenseite und in der offenen Seite der Wanne mündet und die von einem mittigen Bauteil (16) begrenzt ist, das einen konvexen Abschnitt aufweist, der der Seite des Randes der Wanne zugewandt ist und das einen konkaven Abschnitt aufweist, der der gegenüber liegenden Seite zugewandt ist, sowie einen Führungsweg aufweist für den Stift (17) der Klappe während der Übergänge der Klappe in die Verschlussstellung und in die Offenstellung, die einfach durch Ausübung eines Drucks auf die Klappe für jeden Vorgang bewirkt werden und wobei der Stift (17) der Klappe (5) im Boden des konkaven Abschnitts des Bauteils (16) festgehalten wird unter der Einwirkung einer elastischen Anordnung (7, 12), die in Richtung Offenstellung der Klappe (5) wirkt, wenn sich die Klappe in der Verschlussstellung befindet, oder, umgekehrt, dass die Wanne mit mindestens einem Stift versehen ist, der parallel zur Achse der Klappe verläuft und dass die Klappe mit mindestens einem Teil versehen ist, das eine einen Führungsweg bildende Nut aufweist für den Stift der Wanne.

2. Kraftstoffeinlass für ein Kraftfahrzeug nach Anspruch 1, **dadurch gekennzeichnet, dass** jeder Stift (17) im wesentlichen parallel zur Ebene der Klappe oder der Wanne um einen Wert verschiebbar ist, der im wesentlichen gleich der maximalen Breite der zugehörigen Aussparung (13) ist.

3. Kraftstoffeinlass für ein Kraftfahrzeug nach Anspruch 2, **dadurch gekennzeichnet, dass** jede Aussparung (13) zur Aufnahme und Führung eines Stiftes (17) eine konische Einführung (14) aufweist, deren Breite im wesentlichen gleich dem Wert der Verschiebung des zugehörigen Stiftes (17) ist.

4. Kraftstoffeinlass für ein Kraftfahrzeug nach einem der Ansprüche 1 bis 3, **dadurch gekennzeichnet, dass** er einen Stift und eine entsprechende Aussparung in der Endwand der Wanne parallel zur Gelenkachse der Klappe aufweist.

5. Kraftstoffeinlass für ein Kraftfahrzeug nach einem der Ansprüche 1 bis 3, **dadurch gekennzeichnet, dass** er zwei Stifte (17) und zwei entsprechende Aussparungen (13) aufweist, die in zwei senkrecht zur Gelenkachse (10) der Klappe (5) verlaufenden Wänden und symmetrisch zur Mittenebene in Längsrichtung der Wanne (2) angeordnet sind.

6. Kraftstoffeinlass für ein Kraftfahrzeug nach Anspruch 5, **dadurch gekennzeichnet, dass** die Klappe (5) oder die Wanne (2) auf ihrer Innenseite mit einem bügelförmigen Teil versehen ist, wobei die koaxialen Enden seiner Arme (18) schwenkbar an der Innenseite der Klappe (5) oder der Wanne (2) angeordnet sind und wobei sein gerades Mittelteil (19) zwei nach außen gerichtete Verlängerungen aufweist, die die Stifte (17) bilden für das Zusammenwirken mit den Aussparungen (13) der Wanne (2) oder der Klappe (5).

7. Kraftstoffeinlass für ein Kraftfahrzeug nach Anspruch 1, **dadurch gekennzeichnet, dass** jeder Stift, der von einer senkrecht zur Gelenkachse der Klappe angeordneten Wand der Klappe oder der Wanne getragen wird, feststeht, während jeder Führungsweg für einen Stift in einem Teil ausgebildet ist, das gelenkig an der Wanne bzw. an der Klappe angeordnet ist, wobei seine Amplitude der Bewegung der Amplitude der Verschiebung des Stiftes im Führungsweg entspricht.

8. Kraftstoffeinlass für ein Kraftfahrzeug nach einem der Ansprüche 1 bis 7, **dadurch gekennzeichnet, dass** eine Feder (12) die Klappe (5) in Richtung Offenstellung beaufschlagt.

9. Kraftstoffeinlass für ein Kraftfahrzeug nach einem der Ansprüche 1 bis 8, **dadurch gekennzeichnet, dass** die Innenseite (6) der Klappe (5) mit einem Verschlussteil (7) für ein Ende einer der Einfüllleitungen für einen Kraftstofftank versehen ist, das aus einer rohrförmigen Buchse aus einem elastischen Material besteht und zur Abdeckung des Endes (3) der Leitung (4) dient, wobei es sich auf dem Boden der Wanne abstützt.

## Claims

1. A motor vehicle fuel flap of the type comprising a bowl (2) or dish mounted in the body of the vehicle and in the bottom of which opens at least one end (3) of a filler pipe (4) of a fuel tank, and in the proximity of an end of which is pivotably mounted a flap member (5) capable of occupying a first closure position in which its external face is disposed in line with the body and a second open position in which it is pivoted through about 90° to give access to the end of each filler pipe, **characterised in that**, in a zone which is displaced with respect to the pivot mounting axis (10) of the flap member (5) on the bowl (2), the flap member (5) on the side of its internal face comprises at least one finger (17) substantially parallel to the flap member, and the bowl comprises at least one recess (13) which, opening into its internal face and on the open side of the bowl, delimits with a central projection (16) comprising a convex shape directed towards the side of the edge of the bowl and a concave shape directed towards the opposite side, a guide track for guiding the finger (17) of the flap member in the closing and opening operations thereof by a simple thrust force applied to the flap member for each operation, the finger (17) of the flap member (5) being held in a condition of being pressed in the bottom of the concave surface of the projection (16) under the force of resilient means (7, 12) acting in a direction of opening of the flap member (5) when the flap member is in the closure position or conversely the bowl then being provided with at least one finger parallel to the axis of the flap member and the flap member being provided with at least one protrusion comprising a groove forming a guide track for the finger of the bowl.

2. A fuel flap according to claim 1 **characterised in that** each finger (17) has a range of movement substantially parallel to the plane of the flap member or the bowl, of a value substantially equal to the maximum width of the corresponding recess (13).

3. A fuel flap according to claim 2 **characterised in that** each recess (13) intended to receive and guide a finger (17) has a conical entrance (14) of a width substantially equal to the value of the range of movement of the corresponding finger (17).

4. A fuel flap according to any one of claims 1 to 3 **characterised in that** it comprises a finger and a corresponding recess provided in the end wall of the bowl, which is parallel to the pivot mounting axis of the flap member.

5. A fuel flap according to any one of claims 1 to 3 **characterised in that** it comprises two fingers (17) and two corresponding recesses (13) provided in two walls which are perpendicular to the pivot mounting axis (10) of the flap member (5) and which are symmetrical with respect to the longitudinal central plane of the bowl (2).

6. A fuel flap according to claim 5 **characterised in that** the flap member (5) or the bowl (2) is provided on its internal face with a portion in the form of a stirrup of which the ends of the limbs (18) which are coaxial are mounted pivotably on the internal face of the flap member (5) or the bowl (2) and of which the central rectilinear part (19) comprises two outward extensions forming the two fingers (17) which are intended to co-operate with the recesses (13) of the bowl (2) or the flap member (5).

7. A fuel flap according to claim 1 **characterised in that** each finger carried by a wall of the flap member or the bowl which is perpendicular to the axis of rotation of the flap member is fixed while each guide track for a finger is provided in a protrusion mounted pivotably respectively on the bowl or on the flap member with an amplitude of movement corresponding to the amplitude of the range of movement of the finger in the track.

8. A fuel flap according to any one of claims 1 to 7 **characterised in that** a spring (12) tends to cause the flap member (5) to pivot in an opening direction.

9. A fuel flap according to any one of claims 1 to 8 **characterised in that** the internal face (6) of the flap member (5) is provided with a closure portion (7) for an end of the filler pipe of a fuel tank, formed by a tubular sleeve portion made of an elastic material and intended to adopt a position of capping the end (3) of the filler pipe (4) while coming to bear against the bottom of the bowl.
